**Europäisches Patentamt**

**European Patent Office**

**Office européen des brevets**

(19)

(11) Veröffentlichungsnummer: **0 267 962 B1**

(12)

# EUROPÄISCHE PATENTSCHRIFT

(45) Veröffentlichungstag der Patentschrift:
14.08.91 Patentblatt 91/33

(21) Anmeldenummer: 86904988.2

(22) Anmeldetag: 29.05.86

(86) Internationale Anmeldenummer:
PCT/SU86/00053

(87) Internationale Veröffentlichungsnummer:
WO 87/07316 03.12.87 Gazette 87/27

(51) Int. Cl.⁵: **E02B 15/04, C02F 3/34**

(54) **BAKTERIELLE ZUSAMMENSETZUNG UND METHODE ZUM REINIGEN VON DURCH ÖL VERUNREINIGTEM WASSER UND VERUNREINIGTER ERDE.**

(43) Veröffentlichungstag der Anmeldung:
25.05.88 Patentblatt 88/21

(45) Bekanntmachung des Hinweises auf die
Patenterteilung:
14.08.91 Patentblatt 91/33

(84) Benannte Vertragsstaaten:
BE DE FR IT SE

(56) Entgegenhaltungen:
Keine Entgegenhaltungen.

(73) Patentinhaber: ZAPADNO-SIBIRSKY
NAUCHNO-ISSLEDOVATELSKY
GEOLOGORAZVEDOCHNY NEFTYANOI
INSTITUT (ZAPSIBNIGNI)
ul. Volodarskogo, 56
Tjumen, 625670 (SU)

(72) Erfinder: DYADECHKO, Vladimir Nikolaevich
ul. Belinskogo, 6a-60
Tjumen, 625037 (SU)
Erfinder: NESTEROV, Ivan Ivanovich
ul. Respubliki, 48-26
Tjumen, 625000 (SU)
Erfinder: TOLSTOKOROVA, Lidia Evgenievna
ul. Respubliki, 94-227
Tjumen, 625009 (SU)
Erfinder: PLATONOVA, Svetlana
Vladimirovna
ul. Respubliki, 164-45
Tjumen, 625043 (SU)

(74) Vertreter: Eitle, Werner, Dipl.-Ing. et al
Hoffmann, Eitle & Partner Patentanwälte
Arabellastrasse 4
W-8000 München 81 (DE)

EP 0 267 962 B1

## Beschreibung

Technisches Gebiet

Die vorliegende Erfindung bezieht sich auf das Gebiet des Umweltschutzes, betrifft die biologische Reinigung des Wassers und des Bodens von Verschmutzungen mit Erdöl, und insbesondere auf ein Bakteriengemisch, das zur Reinigung des Wassers und des Bodens von Erdölverschmutzungen bestimmt ist.

Zugrundeliegender Stand der Technik

Heute wird eine verstärkte Verschmutzung des Wassers und des Bodens durch Erdölkomponenten nachgewiesen. Das ist dadurch zu erklären, dass der Umfang der Gewinnung, der Beförderung, der Verarbeitung und der Nutzung von Erdöl und Erdölprodukten mit jedem Jahr zunimmt. Die traditionellen Reinigungsverfahren, solche wie mechanische, chemische, physikalische können den ausreichenden Grad der Reinigung des Wassers und des Bodens von Erdölverschmutzungen schon nicht mehr gewährleisten. Daher wurde vorgeschlagen, die Kräfte der Natur selbst und zwar die Einwirkung von Mikroorganismen, die Erdölkohlenwasserstoffe assimilieren können, zu diesem Zweck zu verwenden. Durch theoretische Forschungen ist nachgewiesen, dass im Falle eines Erdölergusses auf der Oberfläche des Meeres in Form einer 0,1-0,1 µm dicken Schicht die Erdölkomponenten, die nicht verdunstet sind, der Einwirkung verschiedener Mikroben ausgesetzt werden, wodurch sich ein bedeutender Teil von Erdöl in 2 bis 3 Monaten zersetzt. Darüber hinaus wird in wissenschaftlichen Forschungen darauf verwiesen, dass die Menge von Erdöl, das unter der Einwirkung der anderen Organismen oder unter der Einwirkung der natürlichen Oxydation zersetzt wird, ungefähr ein Zehntel jener Menge beträgt, die von Mikroben zersetzt wird.

Jedoch bei grösseren Massstäben der Verschmutzung ist der Prozess der natürlichen Selbstreinigung von Gewässern sehr langwierig und kann Dutzende Jahre dauern. Es ist errechnet, dass die Geschwindigkeit der biologischen Degradation 0,05 g/m² (0,5 kg/ha) pro Tag beträgt, und für den Zerfall von $64 \cdot 10^6$ kg (64000 t) Erdöl nach einer Tankerhavarie etwa 20 Jahre erforderlich sei werden (Microbial hydrocarbon degradation within intertidal zones impacted by the Amoco Cadiz oil spillage. Atal R.M., Bronner A. "Amoco ").

Bekannt sind Verfahren zur Entfernung des Erdöls von der Wasseroberfläche unter Benutzung von Mikroorganismen durch Zugabe von Stickstoff- und Phosphorquellen dem verschmutzten Medium zur Stimulierung deren Aktivität (BRD-Anmeldung Nr. 2417431 ; US-PS Nr. 4042495, US-PS Nr. 4087356). Jedoch ist die Stärke einer Population von Mikroorganismen natürlicher Biozönosen dermassen niedrig, dass selbst eine intensive mineralische Kopfdüngung nicht einen befriedigenden Grad und befriedigende Fristen der Reinigung des Wassers von Erdöl gewährleistet hat.

In diesem Zusammenhang erwies sich zusätzliches Auftragen der Bakterienzellen von kohlenwasserstoffoxydierenden Mikroorganismen in Form von isolierten Reinkulturen oder eines Gemisches aus mehreren Bakteriengattungen und -arten auf den verschmutzten Abschnitt als ein mehr perspektivisches (Mikrobiologichesky zhurnal 47, Nr. 2, veröffentlicht 1985, E.I. Kvasnikov, T.M. Kljushnikova, S.L. Kuberskaya, V.S. Zalevsky, G.F. Smirnova, T.P. Kasatkina, V.I. Svarnik, A.A. Koval "Ispolzovanie assotsiatsy baktery dlya ochistki podslanevykh vod ot nefteproduktov", S. 12-14).

Die Schwierigkeit der Kontrolle der qualitativen und quantitativen Zusammensetzung der Assoziationen von Mikroorganismen liess es nicht zu, dieses Verfahren gewerblich auszuüben.

Eine besonders weite Verbreitung fand die Nutzung von Mikroorganismen—Mutanten,—die nach Methoden der Gentechnik gewonnen worden sind.

Solche "Supermikroben", die Erdöl sehr aktiv oxydieren können, sind fähig, Erdöl bei geringen Maßstäben der Verschmutzung in kurzer Zeit zu zersetzen, erweisen sich aber bei solchen Maßstäben der Verschmutzung, die eine längere Zeit zur Erdölzersetzung erfordern, als machtlos. Bekanntlich beträgt die Lebenszeit der Mutante der Gattung Pseudomonas (vom Beginn der Vermehrung bis zur Lysis) nur 7,5 Tage, wodurch ihre Anwendung auf einen Rohölgehalt von höchstens 500 mg pro 1 l Wasser beschränkt ist (Europäisches Patent Nr. 00077422, IPK C 12N 1/20, veröffentlicht am 26, September 1984). Darüber hinaus stellte es sich heraus, dass die Mutanten nicht stabil sind und die erworbenen Eigenschaften unter den natürlichen Bedingungen schnell einbüssen.

Stabilere Eigenschaften besitzen die Reinkulturen, die vom natürlichen Medium isoliert sind. So ist der Stamm Pseudomonas putida-36 bekannt, der aus dem Boden eines durch Erdöl verschmutzten und lange Zeit nicht gereinigten Abschnittes isoliert und im Zentralen Museum für gewerblich nutzbare Mikroorganismen des Instituts "VNII genetika" unter der Nr. B-2443 deponiert ist. Der genannte Stamm wird zu Reinigung des Wassers und des Bodens von Erdöl und Erdölprodukten verwendet (SP-PS Nr, 1076446, IPK C12 N 15/00, veröffentlicht am 28.0284).

2

Das lange Leben des Stammes unter extremen Bedingungen führte zu seiner guten Adaption nicht nur an einen hohen Grad der Verschmutzung mit Erdöl, sondern auch an den Gehalt an hochtoxischen chemischen Verbindungen im Existenzmedium sowie auch an starke Temperaturgefälle. Die hohe Beständigkeit des Stammes und die Stabilität seiner oxydierenden Eigenschaften ermöglichten seine Anwendung zur Reinigung der natürlichen Gewässer mit Süssund Salzwasser, der Industrieabfälle von Erdölverarbeitungswerken, der Behälter zu Aufbewahrung und Beförderung von Erdöl sowie der mit Erdöl verschmutzten Böden.

Jedoch blieb der Grad der Reinigung des Wassers und des Bodens von Erdölen verschiedener Typen nicht ausreichend : 68,4% bei aromatischen und 74,5% bei hochparaffinhaltigen Erdölen.

Somit bleibt das Problem der Entfernung des Erdöls und der Erdölprodukte von der Wasser- und Bodenoberfläche nach wie vor aktuell und erfordert Entwicklung neuer effektiverer Methoden und Mittel.

US-PS 3959127 beinhaltet den Bioabbau von Öl auf Wasserflächen, wobei zur Aktivierung der Mikroorganismen nur Stickstoff- und Phosphorquellen, nicht aber eine biologische Komponente, genutzt werden. Die Stickstoffbiologische Komponente, genutzt werden. Die Stickstoff- und Phosphorquellen sind durch Harnstoff und durch Ester der Pyrophosphorsäure im Masseverhältnis 9 : 1 dargestellt.

SU-A-1076446 beinhaltet ein Verfahren zur Zersetzung von Rohöl, bei dem der natürliche Stamm der Bakterien Pseudomonas putida-36 als biologische Komponente, vermischt mit Mineralsalzen, Stickstoff- und Phosphorquellen ($K_2HPO_4$, $KH_2PO_4$ und $NH_4NO_3$ in einem Verhältnis von 10 : 1 : 2) angewendet wird.

## Offenbarung der Erfindung

Die Aufgabe der Erfindung war es, ein solches Bakteriengemisch zu entwickeln, das zur Reinigung des Wassers und des Bodens von Verschmutzungen mit Erdöl bestimmt ist, das einen höheren Grad der Reinigung des Wassers und des Bodens von Erdölverschmutzungen gewährleistet, nicht teuer, zugänglich, fertigungsgerecht und gewerblich nutzbar ist.

Die gestellte Aufgabe wurde durch die Entwicklung eines Bakteriengemisches zur Reinigung des Wassers und des Bodens von Erdölverschmutzungen gelöst, das den Stamm Pseudomonas putida-36, deponiert unter der Nr. B-2443, als aktive biologische Komponente enthält und erfindungsgemäß dadurch gekennzeichnet ist, daß es eine Mineralsalzmischung aus 34, 26 bis 37, 12 Masse-% $KNO_3$, 28, 66 bis 31, 28 Masse-% $NH_4Cl$, 25, 42 bis 28, 71 Masse-% $NH_4H_2PO_4$ und 11, 66 bis 2, 89 Masse-% $NH_4NO_3$ enthält, dass der Gehalt an lebenden Zellen in der genannten Biokomponente 1,8 × $10^{10}$ bis 3,6 × $10^{12}$ je 1 g Trockensubstanz beträgt, und dass die Biokomponente und die Mischung der Salze in einem Verhältnis von 1 : 26 bis 1 : 32 stehen.

Das genannte Verhältnis den Salze reicht für die Aufrechterhaltung einer aktiven Lebenstätigkeit des genannten Stammes aus.

Das erfindungsgemässe Gemisch kann sowohl mit einem Träger als auch ohne ihn verwendet werden. Der Träger kann flüssig oder fest sein. Als flüssiger Träger kann Wasser und als fester Träger können inerte Stoffe wie Talk, Diatomeenerde, Kaolin, Paraffin und andere geeignete Stoffe verwendet werden.

Für das Gemisch, das Wasser als Träger enthält, beträgt der Gehalt an dem genannten Stamm von $10^4$ bis $10^6$ Zellen/ml und der Gehalt an der genannten Salzmischung 0,07-0,08 Masse%. Diese Grenzen für die Biokomponente werden dadurch bestimmt, dass ein Gehalt an Zellen der Biokomponente unter $10^4$ für das normale Wachstum und die normale Entwicklung von Zellen nicht ausreichend ist, und ein Gehalt an Mischung der genannten Salze unter 0,07 Masse% reicht bei dem vorgegebenen Gehalt an Zellen der Biokomponente zur Bewirkung des Wachstums der Biokomponente nicht aus ; eine Vergrösserung des Gehaltes an Zellen der Biokomponente auf mehr als $10^6$ ist unzweckmässig, denn der Gehalt an Zellen der Biokomponente in Gegenwart von Kohlenwasserstoffen der Verschmutzungen mit Erdöl durch die natürliche Zellenvermehrung steigt.

Der Gegenstand der Erfindung ist auch ein Verfahren zur Reinigung des Wassers und des Bodens von Verschmutzungen mit Erdöl, das dadurch gekennzeichnet ist, daß man ein Gemisch gemäß der oben genannten Art einsetzt. Das Gemisch nach Anspruch 1 wird dabei vorzugsweise in einer Menge von 350-800 mg/m² der zu bearbeitenden Oberfläche verwendet.

Die genannte Menge des Gemisches reicht für die völlige Reinigung des Wassers mit einer Verschmutzung durch Erdöl von höchstens 25 kg/m³ und des Bodens von höchstens 10 kg/m² aus.

Verunreinigende Stoffe bei dem genannten Verfahren können sowohl Rohöl als auch die Produkte seiner Verarbeitung, beispielsweise Masute, Schmierstoffe, Öle sowie brennende Schmiermittel sein.

Die vorliegende Erfindung ermöglicht, die Reinigung des Wassers und des Bodens von Erdölverschmutzungen um 22-32% im Vergleich mit der bekannten Anwendung des Stammes gemäss dem SU-Urheberschein Nr. 107446 zu erhöhen, und ermöglicht, Kohlenwasserstoffe in ökonomisch neutrale Verbindungen umzuwandeln, wodurch ein grosser Effekt bei der Gesundung der Umwelt erzielt wird.

Das verwendete Gemisch ist für den Menschen und für die Umwelt unschädlich, aktiv sowohl im Süss- als auch im Meerwasser und auf dem Land.

Das Gemisch ist hoch resistent gegen die chemische Verschmutzung des Wassers und des Bodens mit toxischen Komponenten der Bohrspülungen und mit anderen chemischen Reagenzien.

Die genannten und die anderen Vorteile der Erfindung werden aus der nachstehenden eingehenden Beschreibung ersichtlich und verständlich.

Der im Gemisch verwendete Stamm Pseudomonas putida-36 ist aus einer verbrauchten Bohrspülung auf organischer Basis (Erdöl) in einer Erdöllagerstätte im Norden des Tjumenskaja-Gebietes der UdSSR isoliert und im Zentralen Museum für gewerblich nutzbare Mikroorganismen des Instituts "VNII genetika" unter der Nummer MM B-2443 am 30.06.84 deponiert.

Pseudomonas putida-36 weist folgende Charakteristiken auf :

Morphologische und Kulturmerkmale :

Die Grösse von Zellen der eintägigen Kultur 1,7-2,4 · 0,3-0,5 µm. Die vorwiegende Form der Zellen — gerade, stäbchenartige, Grammnegative. Auf dem Fleischpeptonagar bildet gewölbte, runde, farblose Kolonien. Grösse 3-7 mm. Bildet Trübe auf der Fleischpeptonbouillon unter Gasentwicklung. Wächst intensiv auf dem Kartoffelagar, der Strich ist konvex, dicht, mit Bildung von Schleim. Verflüssigt Gelatine nicht. Koaguliert und säuert Milch.

Physiologische Merkmale : ist ein Aerobier, wächst bei einer Temperatur von 28-42°C, wächst bei einer Temperatur von unter 4°C nicht.

Verhalten zu Kohlenhydraten : benutzt Laktose, Glukose und Maltose unter Gasentwicklung. Assimiliert Arabinose nicht.

Verhalten zu Kohlenwasserstoffen : benutzt Naphthalin, Kampfer, Oktan, Hexan, Benzol, Toluol, Xylol, Paraffin, Asphaltene. Assimiliert hochparaffinhaltige Erdöle aktiver als aromatische.

Verhalten zu Nahrungsquellen : assimiliert Nitratstickstoff.

Der genannte Stamm erfordert leine speziellen Nährmedien und ist befähigt, auf kohlenwasserstoffarmen Nährböden, beispielsweise auf nicht über 10 g/l mineralisiertem Schichtwasser zu wachsen, ist bei einer Umgebungstemperatur von 70 bis minus 50°C lebensfähig, dessen Aktivität wird von unterschiedlichen Wetterverhältnissen nicht beeinflusst.

Bakterienzellen erhalten beim Trocken die Lebensfähigteit und die kohlenwasserstoffsauernde Aktivität, die dieselbe des Ausgangsstammes übertrifft. Die Prüfung des Titers einer lyophilisierten Kultur zeigte seine Stabilität bei Lagerung innerhalb von 24 Monaten.

Der genannte Stamm gehört zu nichtpathogenen Mikroorganismen. Prüfungen auf die Unschädlichkeit nach folgenden Testen : perorale, intranasale, intraperitoneale und intravenöse Einführung bei weissen Mäusen, keratokonjunktivales Auftragen und Auftragen auf die Haut der Kaninchen zeigten siene praktische Unschädlichkeit und Nichtpathogenität. Bei klinischen Beobachtungen des Personals, das mit dem genannten Stamm arbeitete, wurden keine Allergien und Bakteriusen nachgewiesen.

Gemäss der Erfindung wird der genannte Stamm in Verbindung mit eier Mischung von Mineralsalzen verwendet. Da die Assimilation von Nitraten eine spezifische Besonderheit des Stammes Pseudomonas putida-36 darstellt, wurde bei der Auswahl von Mineralsalzen den Nitratverbindungen'besondere Aufmerksamkeit geschenkt.

Festgestellt ist, dass das Verhältnis von Hauptquellen der Mineralnährung —N, $P_2O_5$, $K_2O$ — 1 : 1 : 1 optimal ist. Ein solches Verhältnis kann bei folgender Zusammensetzung von Mineralsalzen, Masse% erreicht werden :

$$KNO_3 \qquad 34,26-37,12$$

$$NH_4Cl \qquad 28,66-31,28$$

$$NH_4H_2PO_4 \qquad 25,42-28,71$$

$$NH_4NO_3 \qquad 11,66-2,89$$

Somit gewährleistet die Mineralkomponente des erfindungsgemässen Gemisches den Eintritt 17% N (10,2% im Form von $NH_4Cl$, $NH_4NP_3$, $NH_4H_2PO_4$ und 6,8% in Form von $KNO_3$ und $NH_4NO_3$), 17% $P_2O_5$ (u.a. 15% wasserlöslich) in Form von $NH_4H_2PO_4$ und 17% $K_2O$ in Form von $KNH_3$ in den Lebensraum von Bakterien.

Der genannte Ausgleich N, $P_2O_5$ und $K_2O$ gewährleistet die grösste Ergebniswirksamkeit der Anwendung des Stammes Pseudomonas putida-36 zur Reinigung des Wassers und des Bodens von Erdöl und Erdölprodukten.

Möglich ist die Anwendung der Kultur des Mikroorganismus in nativer oder in Trockenform.

Zur Herstellung der Biomasse der Zellen züchtet man den Stamm Pseudomonas patida-36 auf flüssigen oder festen Nährböden, die Stickstoff-, Phosrhor- und Kaliumquellen vorsicht, in Gegenwart von Kohlenwasserstoffen, Die Züchtung erfolgt unter aeroben Verhältnissen bei einer Temperatur von 30°C. Unter solchen Verhältnissen wachsen und entwickeln sich die Zellen von Mikroorganismen aktiv. Nötigenfalls kann die gewonnene Biomasse von Zellen nach der Methode der Lyophilisierung oder Trockenluftzerstäubung getrocknet werden.

Die gewonnene Biomasse muss von $1,8 \cdot 10^{10}$ bis $3,6 \cdot 10^{12}$ lebende Zellen pro 1 g Trockenmasse enthalten.

Möglich ist die Herstellung folgender Varianten des Gemisches : sowohl in Trockenform als auch in Form einer wässrigen Lösung.

Die Herstellung des Gemisches in Trockenform sowohl mit Träger als auch ohne ihn besteht in einem einfachen mechanischen Vermischen der Biokomponente, der Mischung von Mineralsalzen und nötigenfalls auch des Trägers.

Das erfindungsgemässe Gemisch, das eine biologische und eine Mineralkomponente enthält, stellt ein leichtes gelbliches Schüttpulver dar, das sich in Wasser, u.a. auch im mit Erdöl verschmutzen Wasser leicht löst.

Die Herstellung des Gemisches in Form einer wässrigen Lösung besteht im Vermischen in Wasser der Biokomponente und der erwähnten Mischung von Mineralsalzen.

Möglich ist das Vermischen des Trockengemisches mit Wasser oder ein Aufeinanderfolgendes Vermischen jeder Komponente des Gemisches mit Wasser, d.h. der Biokomponente und der Mineralkomponente gesondert.

Das erhaltene wässrige Gemisch ist durchsichtig und opalesziert leicht dank der biologischen Komponente.

Es wird empfohlen, die biologische Komponente und die Mischung von Mineralsalzen bei folgendem Massenverhältnis 1 : 26-1 : 32 aufrechtzuerhalten.

Mit anderen Worten entsprechen einem Teil der biologischen Komponente 26 bis 32 Masseanteile Mineralkomponente (Salzmischung). Dieses Verhältnis wird dadurch bestimmt, dass ein Gehalt an Mineralkomponente von weniger als 26 Masseanteilen für eine effektive Lebenstätigkeit von Bakterien unzureichend sein wird, und deren Gehalt von mehr als 32 Masseanteilen die Lebenstätigkeit von Zellen nicht zusätzlich aktiviert, sondern zu einem nicht gerechtfertigten Verbrauch an Mineralkomponente führt, was nicht erwünscht ist.

Unter dem Begriff Erdölverschmutzung ist das Vorhandensein sowohl von Rohöl wie auch von Erdölprodukten als im Wasser aufgelöst, emulgiert und als Haut in natürlichen und künstlichen Wasserbecken, im Meerwasser und auf Bodenabschnitten zu verstehen.

Die Anwendung des Trockengemisches ist für die Reinigung lotaler Verschmutzungen grosser Flächen oder kleiner Abschnitte der feuchten Böden vorzuziehen.

Dadurch, dass sich das Trockengemisch leicht in Wasser löst, kommt es zu einer leichten und gleichmässigen bakterienzellen in der Berührungszone "Wasser-Erdöl" und wird der Zutritt der Bakterien zum Nahrungssubstrat (Kohlenwasserstoffen) gewährleistet, was ein schnelles Wachstum von Zellen und die völlige Liquidierung von Verschmutzungen mit Erdöl bewirkt, wovon visuelle Beobachtungen und Kontrollanalysen zeugen.

Zur Reinigung grosser Abschnitte der Wasser- und Bodenoberfläche von Verschmutzungen mit Erdöl ist es zweckmässiger, das Gemisch sowohl mit flüssigem Träger, z.B. mit Wasser, als auch mit festem Träger, z.B. mit Talk, Diatomeenerde, Paraffin, Kaolin und anderen leichten festen inerten Stoffen anzuwenden. Die Anwendung von füllstoffen ermöglicht, eine verhaltnismässig geringe Menge des Gemisches auf grossen verschmutzten Flächen gleichmässig zu verteilen, besonders bei der Bearbeitung mit Hilfe von Flugzeugen und Hybschraubern. Bei der Anwendung eines festen Trägers ist sein Verhältnis zum erfindungsgemässen Gemisch wie 30 : 1-50 : 1,

Als flüssiger Träger ist jegliches Wasser vorteilhafter, weil es allgemein zugänglich und neutral sowie gegenüber dem Objekt der Verschmutzung unschädlich ist und weil die Bakterien die Fähigkeit besitzen, sich im Wasser intensiver zu entwickeln was bei der Liquidierung von Verschmutzungen mit Erdöl auf dem Trochenboden sowie auf den Abschnitten mit Sand- oder Steinboden, z.B. auf Badeständen und Uferstrassen besonders wichtig ist.

Die Konzentration der Biokomponente in wässriger Lösung beträgt $10^4$-$10^6$ Zellen/ml. Ist die Konzentration der Biokomponente niedriger als $10^4$, wird sie für ein normales Wachstum und eine normale Entwicklung von Zellen nicht ausreichen, eine Vergrösserung der Konzentration auf mehr als $10^6$ Zellen ist unzweckmässig, weil der Gehalt an Zellen der Biokomponente durch die natürliche Zellenvermehrung in Gegenwart von Kohlenwasserstoffen der Erdölverschmutzungen zunimmt.

Die genannte Zellenkonzentration in wässriger Lösung gewinnt man bei der Auflösung der biologischen Komponente, genommen in einer Menge von 2,5 bis 25 mg, mit einem Gehalt an lebenden Zellen in einem Bereich von $1,8 \cdot 10^{10}$ bis $3,6 \cdot 10^{12}$ in einem Liter Wasser.

Der Gegenstand der Erfindung ist auch ein Verfahren zur Reinigung des Wassers und des Bodens von Verschmutzungen mit Erdöl, das im Auftragen des erfindungsgemässen Gemisches auf verschmutzte Abschnitte besteht. Das Gemisch wird in jeglicher Form (trocken, in wässriger Lösung) vorwiegend einmal auf den verschmutzten Abschnitt aufgetragen, auf dem dank den obengenannten Parametern, und zwar durch den Zellengehalt der Biokomponente und die Menge der Mineralsalzmischung ein aktives Wachstum von Zellen der Biokomponente erfolgt und deren aktive Lebenstätigkeit gewährleistet wird. Je nach Intensität der Verschmutzung mit Erdöl wird das verwendete Gemisch in einer Menge von 350 bis 800 mg/m² der zu behandelnden Oberfläche eingetragen. Die genannte Menge reicht aus, um die Erdölverschmutzung des Wassers bis zu 25 kg/m³ und des Bodens bis zu 10 kg/m² zu beseitigen.

Die vorliegende Erfindung ist kommerziell vorteilhafter im Vergleich mit den bekannten Verfahren.

Sie stellt eine effektive Lösung des Problems des Umweltschutzes dar, insbesondere der Reinigung des Wassers und des Bodens von Verschmutzungen mit Erdöl und übertrifft ihren technisch-wirtschaftlichen Kennziffern nach die bekannten Verfahren ähnlicher Zweckbestimmung.

— Der wichtige Vorteil des erfindungsgemässen Gemisches und des Verfahrens zu dessen Anwendung ist die Erhöhung des Reinigungsgrades des Wassers und des Bodens bis zur Erzielung einer absoluten Zuverlässigkeit bei deren starken Verschmutzung mit Erdöl und Erdölprodukten.

— Das erfindungsgemässe Gemisch vereinfacht den Reinigungsprozess durch seine präparative Fertigform, während die Anwendung einer Reinkultur und der Regel zusätzliche Komplikationen nach sich zieht, die mit der Züchtung von Bakterien in Nährflüssigkeiten, deren Transport zum Anwendungsort und der zusätzlichen Überwachung der Konzentration der lebenden Bakterienzellen usw. zusammenhängen.

— Das erfindungsgemässe Gemisch und das Verfahren zu dessen Anwendung können unter den gewerblichen Bedingungen leicht verwendet werden, weil sie keine spezielle Ausrüstung und kein speziell ausgebildetes Personal erfordern. Das Verfahren kann leicht unter den feldmässigen Bedingungen angewandt werden.

— Das erfindungsgemässe Gemisch erfordert keine besonderen Lagerungsbedingungen, und seine Anwendung lässt sich von den Witterungs- und Klimabesonderheiten nicht beeinflussen. Das Gemisch hat stabile Eigenschaften.

— Das erfindungsgemässe Gemisch ist für den Menschen und die Umwelt unschädlich sowie explosions- und brandsicher.

— Das erfindungsgemässe Gemisch kann effektiv in verschiedenen Medien verwendet werden : Meer- und Süsswasser, Industriebfälle, Grundstücke, die mit Roh- und Bunkeröl sowie mit Endprodukten dessen Verarbeitung z.B. Dieselöl, Masut, Schmierstoffe u.a. verschmutzt sind.

## Beste Ausführungsvariante der Erfindung

Die beste Variante des Gemisches stellt ein Gemisch dar, das den Stamm Pseudomonas putida-36, deponiert unter der Nr. B-2443, und die Mischung von Mineralsalzen, in Masse% : $KNO_3$-36,53 ; $NH_4Cl$-30,83 ; $NH_4H_2PO_4$-27,53 und $NH_4NP_3$-5,11 enthält.

Dabei beträgt der Gehalt der Biokomponente an lebenden Zellen etwa $3,6 \cdot 10^{12}$ je ein Gramm Trockenbiomasse. Das Verhältnis zwischen der Bio- und der Mineralkomponente macht 1 : 28 aus. Das Gemisch wird durch Vermischen der Komponenten bei den genannten Massenverhältnissen hergestellt. Das Gemisch stellt ein leichtes feindisperses Pulver dar. Zweckmässigerweise wird das genannte Gemisch in Form einer wässrigen Lösung verwendet.

Dieses Gemisch ist im Vergleich zu den anderen Varianten effektiver, weil es einen geringeren Verbrauch an Biokomponente erfordert, mit anderen Worten ermöglicht es, mit ein- und demselben Volumentinhalt der Biokomponente eine bedeutend grössere verschmutzte Fläche zu bearbeiten. Bei der Anwendung des Gemisches, das die Biokomponente mit einer Anzahl lebender Zellen von $1,8 \cdot 10^{10}$ je 1 Gramm Trockenbiomasse enthält, beträgt sein Verbrauch 25 mg je 1 m² und die Anwendung der Biokomponente mit einer Anzahl lebender Zellen von $3,6 \times 10^{12}$ je 1 g Trockenbiomasse nur 2,5 mg je 1 m², was eine Reduzierung des Verbrauchs an Biokomponente auf das 10 fache bedeutet und einer Vergrösserung der Behandlungsoberfläche auf das 10 fache gleichkommt.

Diese Variante verringert die Aufwendungen für den Transport des Gemisches wesentlich.

Zum besseren Verstehen der Erfindung werden Beispiele angeführt, von denen die Beispiele 1 bis 3 die Herstellung der Biokomponente illustrieren, wobei die Beispiele 4 bis 6 die Herstellung des Gemisches in Trockenform ohne Träger die Beispiele 7 bis 9 die Herstellung des Gemisches in einer wässrigen Lösung die Beispiele 10 bis 12 die Herstellung des Gemisches in Trockenform mit Träger, und die Beispiele 13 bis 17 die Anwendung des erfindungsgemässen Gemisches zur Reinigung des Wassers und des Bodens von Verschmutzung mit Erdöl illustrieren, das Beispiel 18 illustriert die Anwendung des reinen Stammes der Mineralsalzmischung und des erfindungsgemässen Gemisches.

Beispiel 1

Das Beispiel veranschaulicht die Herstellung der Zellenbiomasse der aktiven Komponente des Gemisches, Der Ausgangsstamm Pseudomonas putida-36 wird in der Nährflüssigkeit nach dem Submersverfahren im Fermenter auf einem Nährmedium folgender Zusammensetzung : (g)

$$
\begin{aligned}
K_2HPO_4 \quad &- \quad 10,0 \\
KH_2PO_4 \quad &- \quad 1,0 \\
NH_4NO_3 \quad &- \quad 2,0 \\
H_2O \quad &- \quad 1000,0
\end{aligned}
$$

in Gegenwart von Kohlenwasserstoffen, z.B. von Rohöl gezüchtet. Die Züchtung erfolgt unter aeroben Bedingungen bei einer Temperatur von 30°C. Die erhaltene Biomasse wird verdichtet und nach dem Methode der Trockenluftzerstäubung bei einer Temperatur von plus 60°C getrocknet. Die Anzahl von lebenden Zellen, die nach der Titrationsmetode bestimmt ist, betrug $1,8 \cdot 10^{10}$ je ein Gramm Trockensubstanz.

Beispiel 2

Eine Biomasse wird nach dem Verfahren, wie in Beispiel 1 beschrieben, hergestellt. Die hergestellte Biomasse wird nach der Methode der Trockenluftzerstäubung bei einer Temperatur von 40°C getrocknet. Das erhaltene Bioprodukt enthält $2,4 \cdot 10^{11}$ Zellen je 1 Gramm Trockensubstanz.

Beispiel 3

Eine Biomasse, die nach dem Verfahren, wie in Beispiel 1 beschrieben, hergestellt ist, wird durch Lyophilisierung getrocknet. Das erhaltene Produkt enthält $3,6 \cdot 10^{12}$ lebende Zellen je 1 Gramm Trockensubstanz.

Beispiel 4

Eine Trockenbiomasse, die, wie in Beispiel 1 beschrieben, hergestellt ist, in einer Menge von 1 g wird mit 25 g Mineralsalzmischung, genommen in folgendem Massenverhältnis : $KNO_3$-34, 26, $NH_4Cl$-28, 66%, $NH_4H_2PO_4$-25,42%, $NH_4NO_3$-11,66%, vermischt. Das erhaltene Gemisch stellt ein feindisperses gelbliches Pulver dar.

Beispiel 5

Eine Trockenbiomasse in einer Menge von 1 Gramm, die, wie in Beispiel 2 beschrieben, hergestellt ist, wird mit 28 g Mineralsalzmischung, genommen in folgendem Verhältnis : $KNO_3$-36,53, $NH_4Cl$-30,83%, $NH_4H_2PO_4$-27,53% ; $NH_4NO_3$-5,11% vermischt. Man erhält ein Gemisch in Form eines feindispersen gelblichen Pulvers.

Beispiel 6

Zur Herstellung einer stärker konzentrierten Zusammensetzung des Gemisches vermischt man die Trockenbiomasse in einer Menge von 1 g. die, wie in Beispiel 3 beschrieben, hergestellt ist, und die $3,6 \cdot 10^{12}$ lebende Zellen je 1 g Trockensubstanz enthält, mit 32 g Mineralsalzmischung, die $KNO_3$-37,12%, $NH_4Cl$-31,28% $NH_4H_2PO_4$-28,71%, $NH_4NO_3$-2,89% enthält. Man erhält ein Gemisch in Form eines feindispersen gelblichen Pulvers.

Beispiel 7

Zur Herstellung einer wässrigen Lösung vermischt man 362,5 mg Trockengemisch, das, wie in Beispiel 4

7

beschrieben, erhalten ist, mit 0,5 l Wasser. Man erhält ein flüssiges Gemisch mit einem Gehalt an lebenden Zellen von $10^4$ in 1 ml und 0,07% Mineralsalzmischung. Das erhaltene Gemisch ist durchsichtig, opalesziert leicht durch die biologische Komponente.

## Beispiel 8

Zur Herstellung einer wässrigen Lösung löst man 540 mg Trockengemisch, das, wie in Beispiel 5 beschrieben hergestellt ist, in 0,75 l Wasser. Man erhalt ein wässriges Gemisch, das $10^5$ Zellen pro 1 ml und 0,07% Mineralsalzmischung enthält. Das erhaltene Gemisch ist durchsichtig, opalesziert leicht durch die Biokomponente.

## Beispiel 9

Zur Herstellung einer wässrigen Lösung löst man 825 mg Trockengemisch, das, wie in Beispiel 6 beschrieben, hergestellt ist, in 1 Liter Wasser. Man erhält eine wässrige Lösung, die $10^6$ lebende Bakterienzellen pro 1 ml und 0,08% Mineralkomponente enthält.

## Beispiel 10

26 g Trockengemisch, das die Biokomponente in einer Menge von 1 g und die Mineralsalzmischung in einer Menge von 25 g enthält und, wie in Beispiel 4 beschrieben, erhalten ist, mischt man nit 780 g Paraffin als Träger. Das Massenverhältnis zwischen Trockengemisch und Träger macht 1 : 30 aus. Der Träger wird vorher bis zu einer Kornzusammensetzung von 0,05 bis 0,1 mm zerkleinert und danach zusammen mit Trockengemisch auf einen Granullierteller gebracht. Man erhält ein granuliertes Gemisch, das zur Reinigung von Wasseroberflächen von Erdölverschmutzungen empfohlen wird.

## Beispiel 11

Ein Trockengemisch, das die Biokomponente in einer Menge von 1 g und die Mineralsalzmischung in einer Menge von 28 g enthält, das nach Beispiel 5 erhalten ist, wird in einer Menge von 29 g mit Kaolin als Träger, genommen in einer Menge von 1160 g, vermischt, wobei man 40 Teile Träger pro 1 Massenteil Trockengemisch rechnet. Das Gemisch wird sorgfältig mit Hilfe eines mechanischen Rührwerkes gerührt. Man erhält ein Gemisch, das ein leichtes Schüttpulver von weisser Farbe darstellt. leichtes Schüttpulver von weisser Farbe darstellt.

## Beispiel 12

Ein Trockengemisch, das aus 1 g Biokomponente und 32 g Mineralsalzmischung besteht und nach Beispiel 6 erhalten ist, wird in einer Menge von 33 g mit 1650 g Diatomeenerde als Träger gemischt. Das trockene Gemisch und der Träger stehen im Verhältnis 1 : 50 (in Massenanteilen). Das mit dem Träger sorgfältig vermischte Gemisch stellt ein leichtes Schüttpulver von hellgrauer Farbe dar. Das erhaltene Gemisch wird zur Reinigung grosser Flächen versumpfter und stark durchfeuchter Böden von Erdöl empfohlen.

## Beispiel 13

Der Bodenabschnitt mit einer Fläche von 50000 m² hatte eine Erdölverschnutzung in einer Menge von 10 kg Rohöl pro 1 m² Fläche. Mit anderen Worten, Machte die Gesamtmenge an Rohöl auf dem Bodenabschnitt $5 \cdot 10^5$ kg (500 t) aus. Um diese Erdölverschnutzung zu beseitigen, verwendet man ein Wassergemisch, das nach Beispiel 9 hergestellt wird. Das genannte Gemisch wird in einem Volumen von 50 m³ bereitet. Jedes Liter Gemisch enthält 825 mg Biokomponente und Mineralsalze. Das Gemisch von 1 l Volumen wird gleichmässig auf je einem 1 m²-Bodenabschnitt, der verunreinigt ist, durch Besprühen von den selbstfahrenden Anlagen aus, verteilt, die mit Druckpumpen ausgestattet sind, deren Leistungsfähigkeit ermöglicht, den zerstäubten Strahl der Flüssigkeit in eine Entfernung von etwa 35 bis 45 m zuzuführen. In zwei Monaten nach einmaliger Behandlung betrug die Menge des vernichteten Erdöls $4,6 \cdot 10^5$ kg (460 t). Der Versuch wurde unter folgenden Wetterbedingungen durchgeführt : Sonnenwetter und Regenwetter wechselten sich ab, Tempetatungefälle betrugen von + 26 bis 0°C. Auf dem Feld der Verschmutzung wurde eine aktive Vegetation nachgewiesen.

EP 0 267 962 B1

Beispiel 14

Ein Abschnitt des natürlichen Süsswasserbeckens auf dem Territorium einer Erdollagerstätte hatte eine Fläche von 25000 m² und eine Verschmutzung mit Rohöl in einer Menge von 23,3 Liter pro 1 m³, mit anderen Worten enthielt das Becken 5,815 · 10⁵ kg (581,5 t) Rohöl. Zur Beseitigung der Verschnutzung mit Erdöl wird ein Wassergemisch, erhalten nach Beispiel 8, benutzt, das 543,75 mg trochenes Gemisch enthält, in dem 18,75 mg Biokomponente und 525 mg Mineralsalzmischung in einem Verhaltnis 1 : 28 stehen, und in der Wasserlösung befinden sich lebende Bakterienzellen in einer Menge von 10⁵ je 1 ml und Mineralsalsmischung in einer Menge von 0,07%. Das Wassergemisch wird in einem Volumen von 18,75 m³ hergestellt, wobei man 0,75 l genanntes Gemisch pro 1 m² verunreinigte Oberfläche rechnet. Auf Auftragen des Wassergemisches wird durch gleichmassige Zerstäubung vom Flugzeug aus durchgeführt. Die Behandlung des Beckens wird ein Mal vorgenommen. Nach Ablauf von zwei Monaten war das Becken vollständig vom Erdöl gereinigt.

Beispiel 15

Das Behandlungsobjekt sind offenen Sammelteiche für Industrieabwässer eines Erdölverarbeitungswerkes. Die Gesamtfläche des Bechens — 800000 m², der Waaserinhalt des Bechens — 1,5 Mil · m³. Der Gehalt an Erdölprodukten (wasaerlöslichen, emulgierten und dünnschichtigen) beträgt 75 mg/l.

Zur Beseitigung einer Erdölverschmutzung wird ein Gemisch benutzt, das nach Beispiel 7 gewonnen ist und 2,5 kg Biokomponente sowie 70 kg Mischung von Mineralsalzen enthält, die in 400 m³ Wasaer aufgelöst sind, was den Gehalt an lebenden Bakterienzellen und an Mineralsalzmischung 10⁴ bzw. 0,07% pro 1 ml Wassergarantiert.

Das Gemisch wird gleichmässig über die ganze Fläche des Beckens, 0,5 l/m² gerechnet, von einem Loschfahrzeug aus, das mit einem Tank und Strahlrohr ausgestattet ist, verteilt.

In 14 Tagen nach einmaliger Bearbeitung verminderte sich der Gehalt an Erdölprodukten auf 0,5 mg/l und blieb auf diesem Niveau während darauffolgender 14 Tage unverändert, obgleich industrielles Abwasser, das 75 mg/l Erdölprodukte enthielt, in das Becken ständig einlief.

Beispiel 16

In einen gläsernen Behälter von 1,25 m Lange, 0,8 m Breite und 0,15 m Höhe werden 100 Liter Wasser des Karischen Meeres und 1720 g Rohöl eingehüllt. Zur Reinigung des Erdölfilms wird 22,5 g Gemisch, nach Beispiel 10 hergestellt, benutzt. Dieses Gemisch enthält 25 mg biologische Komponente, 700 mg mineralische Komponente und 21,75 g Paraffin als Träger. Bei einer Temperatur der Raumluft von 18°C wurde das Meerwasser in 14 Tagen nach einmaliger Behandlung völlig von Erdöl gereinigt.

Beispiel 17

Ein versumpfter Bodenabschnitt von 200 m² mit einer Verschmutzung mit Erdöl von 60 kg (0,3 kg/m²) wird mit dem nach Beispiel 12 in einer Menge von 7500 g hergestellten Gemisch behandelt.Das trockene Gemisch wird über das Verunreinigungsfeld, 37,5 g pro 1 m² gerechnet, gleichmässig verteilt. Die Dosis besteht zu 25 mg aus Biokomponente, zu 750 mg aus. Mineralsalzmischung und zu 36,75 g aus Diatomeenerde als inerter Träger. Nach Ablauf von 22 Tagen nach einmaliger Behandlung wurde das Feld völlig von Erdöl gereinigt.

Beispiel 18

Das vorliegende Beispiel illustriert die Anwendung eines reinin Stammes Pseudomonas putida-36, einer gesonderten Mineralsalzmischung und deren Verbindung, d.h. des vorgeschlagenen Gemisches zur Beseitigung von Verunreinigungen mit Erdöl. Die Ergebnisse sind in einer Tabelle zusammengeführt.

9

Tabelle

Ergebnisse des Testes des Stammes Pseudomonas putida-36, der Mineralsalzmischung und des erfindungsgemässen Gemisches zur Reinigung des Wassers und des Bodens von Verschmutzungen durch Erdöl.

| lfd. Nr. | Testverhältnisse | angewandte Substanz | Nr. des Testes | Wirkungsgrad der Zerströrung % von Erdölen | |
|---|---|---|---|---|---|
| | | | | aromatische | hochparaffinhaltig |
| 1 | 2 | 3 | 4 | 5 | 6 |
| 1 | Wasser mit | Stamm Pseudomonas putida 36 | 1 | 69,1 | 72,8 |
| 2 | Verschmutzung | | 2 | 87,5 | 76,7 |
| 3 | | | 3 | 68,72 | 73,9 |
| 4 | durch Erdöl 1 % | Mineralsalzmi-schung im | | 68,44* | 74,46* |
| 5 | des Volumenin- | Verhältnis (%) | 1 | 6,7 | 7,1 |
| 6 | inhaltes | $KNO_3$ — 36,53 | 2 | 6,9 | 5,8 |
| 7 | | $NH_4Cl$ — 30,83 | 3 | 5,6 | 6,7 |
| 8 | Dauer des Testes 96-120 Studen | $NH_4H_2PO_4$ — 27,53 $NH_4NO_3$ — 5,11 | | 6,4* | 6,53* |
| 9 | | Erfindungsge-mässes Gemisch, | 1 | 98,6 | 99,8 |
| 10 | | das Stamm Pseudo-monas | 2 | 98,9 | 100,0 |
| 11 | | putida-36 und Mi-schung von ge- | 3 | 99,7 | 100,0 |
| 12 | | nannten Mineral-salzen enthält | | 99,06* | 99,93* |
| 13 | Boden mit Erdölver- | Stamm Pseudomonas putida-36 | 1 | 73,9 | 75,1 |
| 14 | schmutzung 10% | | 2 | 68,2 | 74,9 |
| 15 | des Volumeninhal- | | 3 | 72,7 | 79,2 |
| 16 | tes | | | 71,6* | 76,4* |
| 17 | Dauer des | Mineralsalzmis-schung im | 1 | 7,7 | 7,9 |
| 18 | Testes 20-30 | Verhältnis (%) | 2 | 7,9 | 8,0 |
| 19 | Tage | $KNO_3$ — 36,53 | 3 | 6,9 | 8,5 |
| 20 | | $NH_4Cl$ — 30,86 $NH_4H_2PO_4$ — 27,53 $NH_4NO_3$ — 5,11 | | 7,5* | 8,13* |
| 21 | | Erfindungsgemäs-ses Gemisch, das | 1 | 98,4 | 99,8 |
| 22 | | den Stamm Pseudo-monas putida-36 | 2 | 98,7 | 100,0 |
| 23 | | und die Mischung von genannten Mi- | 3 | 99,6 | 99,9 |
| 24 | | neralsalzen en-thält | | 98,9* | 99,9* |

* - ist Mittelwert

Wie aus der Tabelle ersichtlich ist, zerlegt der Reinstamm Pseudomonas putida-36 Erdöl zu 68 bis 78% der Ausgangsmenge ; Mineralsalzmischung (ohne Stamm) 6,4 bis 8,13% und das erfindungagemässe Gemisch 98,9 bis 99,9%.

Die Anwendung der Mineralsalzmischung in Verbindung mit dem Reinstamm Pseudomonas putida-36 erhöht den wirkungsgrad des genannten Stammes im Durchschnitt auf das 1,31-1,45 fache und kann praktisch die 100%ige Reinigung des verschnutzten Mediums von Erdöl und Erdölproduften gewährleisten.

## INDUSTRIELLE ANWENDBARKEIT

Die vorliegende Erdindung kann zur Reinigung des Wasaers und des Bodens, die durch Erdöl und Endprodukte dessen Verarbeitung verschmutzt sind, im industriellen Ausmass effektiv angewandt werden. Das Gemisch kann als Trockensubstanz oder als wässrige Losung durch Zerstäuben auf verschmutzte Wasser- oder Bodenoberfläche verwendet werden.

## Patentansprüche

1. Bakteriengemisch zur Reinigung des Wassers und des Bodens von Verschmutzungen durch Erdöl, das den Stamm Pseudomonas putidas-36 als aktive Biokomponente, deponiert unter der Nr. B-2443, enthält, dadurch **gekennzeichnet**, dass es eine Mineralsalzmischung aus 34,26 bis 37,12 Masse-% $KNO_3$, 28,66 bis 31,28 Masse-% $NH_4Cl$, 25,42 bis 28,71 Masse-% $NH_4H_2PO_4$ und 11,66 bis 2,89 Masse-% $NH_4NO_3$ enthält, dass der Gehalt an lebenden Zellen in der genannten Biokomponente $1,8 \times 10^{10}$ bis $3,6 \times 10^{12}$ je 1 g Trockensubstanz beträgt, und dass die Biokomponente und die Mischung der Salze in einem Masserverhältnis von 1: 26 bis 1 : 32 stehen.

2. Gemisch nach Anspruch 1, dadurch **gekennzeichnet**, dass es einen inerten Träger enthält.

3. Gemisch nach Anspruch 2, dadurch **gekennzeichnet**, dass der Träger Wasser ist, dass die Anzahl der Zellen der genannten Biokomponente $10^4$ bis $10^6$ je 1 ml beträgt, und dass die Konzentration der Mineralkomponente 0,07 bis 0,08 Masse-% beträgt.

4. Verfahren zur Reinigung des Wassers und des Bodens von Verschmutzungen mit Erdöl, dadurch **gekennzeichnet**, dass man ein Gemisch gemäss den Ansprüchen 1 bis 3 einsetzt.

5. Verfahren nach Anspruch 4, dadurch **gekennzeichnet**, dass man ein Gemisch nach Anspruch 1 in einer Menge von 350 bis 800 mg/m² der zu bearbeitenden Oberfläche verwendet.

## Claims

1. Bacterial mixture for cleansing water and floors of contamination by mineral oil, which contains the strain Pseudomonas putidas-36 as active biological component, deposited under number B-2443, characterized in that it contains a mineral salt mixture of 34.26 to 37.12 weight-% $KNO_3$, 28.66 to 31.28 weight-% $NH_4Cl$, 25.42 to 28.71 weight-% $NH_4H_2PO_4$ and 11.66 to 2.89 weight-% $NH_4NO_3$, in that the content of living cells in the said biological component amounts to $1.8 \times 10^{10}$ to $3.6 \times 10^{12}$ per gramme of dry substance and in that the biological component and the mixture of the salts are in a weight ratio of 1 : 26 to 1 : 32.

2. Mixture according to claim 1, characterized in that it contains an inert carrier.

3. Mixture according to claim 2, characterized in that the carrier is water, in that the number of cells of the said biological component amounts to $10^4$ to $10^6$ per ml and in that the concentration of the mineral component amounts to 0.07 to 0.08 weight-%.

4. Method for cleaning water and floors of contamination with mineral oil, characterized in that a mixture according to any of claims 1 to 3 is employed.

5. A method according to claim 4, characterized in that a mixture according to claim 1 is used in an amount of 350 to 800 mg/m² of the surface to be treated.

## Revendications

1. Mélange bactérien pour l'épuration de l'eau et du sol des pollutions par le pétrole, qui contient la souche Pseudomonas putidas-36 en tant que biocomposant actif, déposée sous le N° B-2443, caractérisé en ce qu'il contient un mélange de sels minéraux formé de 34,26 à 37,12% en poids de $KNO_3$, de 28,66 à 31,28% en poids de $NH_4Cl$, de 25,42 à 28,71% en poids de $NH_4H_2PO_4$ et de 11,66 à 2,89% en poids de $NH_4NO_3$, en ce que la teneur en cellules vivantes dans ledit biocomposant est de 1,8 × $10^{10}$ à 3,6 × $10^{12}$ pour 1 g de substance sèche et en ce que le biocomposant et le mélange des sels sont à un rapport en poids de 1 : 26 à 1 : 32

2. Mélange selon la revendication 1, caractérisé en ce qu'il contient un support inerte.

3. Mélange selon la revendication 2, caractérisé en ce que le support est de l'eau, en ce que le nombre des cellules dudit biocomposant est de $10^4$ à $10^6$ pour 1 ml, et en ce que la concentration du composant minéral est de 0,07 à 0,08% en poids.

4. Procédé pour l'épuration de l'eau et du sol des pollutions par le pétrole, caractérisé en ce qu'on utilise un mélange selon les revendications 1 à 3.

5. Procédé selon la revendication 4, caractérisé en ce qu'on utilise un mélange selon la revendication 1 en une quantité de 350 à 800 mg/m² de la surface à traiter.